(19) Europäisches Patentamt
European Patent Office
Office européen des brevets

(11) **EP 4 503 228 A1**

(12) **EUROPEAN PATENT APPLICATION**
published in accordance with Art. 153(4) EPC

(43) Date of publication:
**05.02.2025 Bulletin 2025/06**

(21) Application number: **22934250.6**

(22) Date of filing: **31.03.2022**

(51) International Patent Classification (IPC):
**H01M 10/0567** (2010.01)     **H01M 10/0525** (2010.01)

(52) Cooperative Patent Classification (CPC):
**H01M 10/0525; H01M 10/0567; Y02E 60/10**

(86) International application number:
**PCT/CN2022/084597**

(87) International publication number:
**WO 2023/184413 (05.10.2023 Gazette 2023/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Zhangwan Town, Jiaocheng District
Ningde City
Fujian 352100 (CN)**

(72) Inventors:
• **XU, Chunrui
Ningde City, Fujian 352100 (CN)**
• **ZHOU, Shaoyun
Ningde City, Fujian 352100 (CN)**

(74) Representative: **Klunker IP
Patentanwälte PartG mbB
Destouchesstraße 68
80796 München (DE)**

(54) **ELECTROCHEMICAL APPARATUS AND ELECTRONIC APPARATUS**

(57)     This application relates to an electrochemical apparatus and an electronic apparatus. Some embodiments of this application provide an electrochemical apparatus, where the electrochemical apparatus includes: a positive electrode, where the positive electrode includes a positive electrode active material layer, and the positive electrode active material layer includes a positive electrode active material, wherein the positive electrode active material includes lithium nickel oxide and an electrolyte. The electrolyte includes fluoroethylene carbonate, where based on a total mass of the electrolyte, a mass percentage of the fluoroethylene carbonate is a%. In this application, a charge cut-off voltage U V of the electrochemical apparatus, a molar ratio x of nickel in the lithium nickel oxide, and the mass percentage a% of the fluoroethylene carbonate in the electrolyte satisfy the following relationship:

$$a \leq \frac{2.3}{x^{0.7}} - 6x^{0.1}(U - 4.2)$$

.

EP 4 503 228 A1

**Description**

**TECHNICAL FIELD**

This application relates to the field of energy storage, specifically to an electrochemical apparatus, and in particular, to a lithium-ion battery.

**BACKGROUND**

With the development of technologies and the increasing demand for mobile apparatuses, demand for electrochemical apparatuses (for example, lithium-ion batteries) has increased significantly. Electrochemical apparatuses are widely used in fields such as electric vehicles, consumer electronics, and energy storage apparatuses. To seek electrochemical apparatuses with high energy density, high discharge performance, and high cycling performance, one of the main research directions in the field of electrochemical energy storage is the research and improvement of electrode materials and electrolyte materials in electrochemical apparatuses.

At present, among the many mature positive electrode materials in commercial electrochemical apparatuses, nickel-containing positive electrode materials, such as lithium nickel cobalt manganese oxide, lithium-rich manganese-based materials, lithium nickelate, lithium nickel manganese oxides, and the like, due to their high mass-energy density, have gradually become one of the main research directions for high-energy density materials. However, to further increase energy density, continuously increasing the amount of nickel in nickel-containing positive electrode materials can lead to severe phase transition oxygen release in the positive electrode material, posing significant challenges to high-temperature storage and cycling performance, and safety performance.

In view of this, how to further enhance the high-temperature storage and cycling performance, and safety performance of lithium-ion batteries has become a top priority for major lithium-ion battery manufacturers and related researchers. Various forms of defects still exist in the improvement schemes of nickel-containing positive electrode materials. Therefore, it is indeed necessary to perform continuous research and improvement on nickel-containing positive electrode active materials to enhance the battery capacity, cycling performance, and rate performance of electrochemical apparatuses.

**SUMMARY**

Embodiments of this application provide a negative electrode active material with a substrate-free adhesive film and an electrochemical apparatus including the same to solve at least one problem existing in the related field to at least some extent.

According to one aspect of this application, some embodiments of this application provide an electrochemical apparatus, where the electrochemical apparatus includes: a positive electrode, where the positive electrode includes a positive electrode active material layer, and the positive electrode active material layer includes a positive electrode active material, where the positive electrode active material includes lithium nickel oxide; and an electrolyte, where the electrolyte includes fluoroethylene carbonate, where based on a total mass of the electrolyte, a mass percentage of the fluoroethylene carbonate is a%. In this application, a charge cut-off voltage U V of the electrochemical apparatus, a molar ratio x of nickel in the lithium nickel oxide, and the mass percentage a% of the fluoroethylene carbonate in the electrolyte satisfy the following relationship:

$$a \leq \frac{2.3}{x^{0.7}} - 6x^{0.1}(U - 4.2).$$

According to some embodiments of this application, the molar ratio x of nickel in the lithium nickel oxide satisfies $0.3 < x \leq 1$.

According to some embodiments of this application, the lithium nickel oxide includes a compound represented by a general formula $LiNi_xMl_yM2_zO_2$ or $n[Li_2MnO_3] \cdot (1-n)[LiNi_xM1_yM2_zO_2]$, where M1 and M2 include one or more selected from a group consisting of Co, Mn, Al, Mg, Ti, or Zr, $0.3 \leq x \leq 1$, $0 \leq y \leq 0.7$, $0 \leq z \leq 0.7$, and $0 \leq n < 1$.

According to some embodiments of this application, the charge cut-off voltage U of the electrochemical apparatus is in a range of 4.2 V to 5.5 V

According to some embodiments of this application, a mass percentage a% of fluoroethylene carbonate in the electrolyte is in a range of 0.05% to 5.3%.

According to some embodiments of this application, the electrolyte further includes a sulfur-oxygen double-bond compound.

According to some embodiments of this application, the sulfur-oxygen double-bond compound includes one or more selected from a group consisting of 1,3-propane sultone (PS), 2,4-butane sultone, 1,4-butane sultone, diethyl sulfate (DTD), propylene-1,3-sultone (PES), methylene disulfonate (MMDS), vinyl sulfone (DVS), 1,2,6-oxadithiane, 2,2,6,6-tetraoxide (CAS: 4720-58-5), 4-methylethylene sulfate (PCS), 3-cyclobutene sulfone, dihydro-1,3,2-dioxathiacyclo[1,3,2] dioxathiacyclo-2,2,5,5-tetraoxide (CAS: 496-45-7), and pentaerythritol bicyclic sulfate compounds.

According to some embodiments of this application, based on the total mass of the electrolyte, a mass percentage of the sulfur-oxygen double-bond compound is b%, where the mass percentage b% of the sulfur-oxygen double-bond compound and the mass percentage a% of the fluoroethylene carbonate satisfy the following relationship:

$$0.02 \leq \frac{b}{a} \leq 5$$

According to some embodiments of this application, based on the total mass of the electrolyte, a mass percentage b% of the sulfur-oxygen double-bond compound is in a range of 0.1% to 5%.

According to some embodiments of this application, the electrolyte further includes an organic solvent and a lithium salt, where the organic solvent includes a linear carbonate, and the linear carbonate is selected from at least one of dimethyl carbonate, diethyl carbonate, or ethyl methyl carbonate.

According to some embodiments of this application, based on a total mass of the organic solvent, a percentage of the linear carbonate is less than or equal to 70%; and/or based on the total mass of the electrolyte, a percentage of the linear carbonate is less than or equal to 60%.

According to some embodiments of this application, based on the total mass of the electrolyte, a mass percentage c% of the linear carbonate has a molecular molar mass greater than 100, where the mass percentage c% of the linear carbonate with the molecular molar mass greater than 100 and the mass percentage a% of the fluoroethylene carbonate satisfy the following relationship: $$4 \leq \frac{c}{a} \leq 600$$

According to some embodiments of this application, based on the total mass of the electrolyte, the mass percentage c% of the linear carbonate with the molecular molar mass greater than 100 is in a range of 20% to 60%.

According to some embodiments of this application, the electrolyte further includes an additive lithium difluorophosphate.

According to some embodiments of this application, based on the total mass of the electrolyte, a mass percentage of the additive lithium difluorophosphate is d%, where the mass percentage d% of the additive lithium difluorophosphate and the molar ratio x of nickel in the lithium nickel oxide satisfy the following relationship: $0.3 \leq$

$$\frac{x}{d} \leq 100$$

According to some embodiments of this application, based on the total mass of the electrolyte, the mass percentage d% of the additive lithium difluorophosphate is in a range of 0.01% to 1%.

According to some embodiments of this application, the electrolyte further includes a polycyan compound, and the polycyan compound includes one or more selected from a group consisting of a dinitrile compound, a trinitrile compound, and a tetranitrile compound.

According to some embodiments of this application, the dinitrile compound includes one or more selected from a group consisting of succinonitrile, adiponitrile, 1,2-bis(cyanoethoxy)ethane, and 1,4-dicyano-2-butene; the trinitrile includes one or more selected from a group consisting of 1,3,6-hexanetrinitrile and 1,2,3-tris(2-cyano)propane; and the tetranitrile includes one or more selected from a group consisting of 1,1,3,3-propanetetracarbonitrile, 1,1,2,2-ethanetetracarbonitrile, 4-(2-cyanoethyl)-4-cyanopimelanitrile, and pentane-1,3,3,5-tetracarbonitrile.

According to some embodiments of this application, based on the total mass of the electrolyte, a mass percentage of the polycyan compound is in a range of 0.1% to 5%.

According to another aspect of this application, some embodiments of this application provide an electronic apparatus, including the electrochemical apparatus in the foregoing embodiments.

In this application, a nickel-containing positive electrode active material is adopted and an electrolyte containing the additive fluoroethylene carbonate is introduced. Through the controlling of the amount of nickel in the positive electrode active material and the amount of fluoroethylene carbonate in the electrolyte, fluoroethylene carbonate forms a solid electrolyte interface film on the surface of the negative electrode for protection, and the self-repair of the solid electrolyte interface film during the use of the electrochemical apparatus is improved. At the same time, this reduces the oxidative decomposition and dehydrogenation reactions of high-nickel-amount positive electrode active materials with fluoroethylene carbonate under high voltage, significantly improving the high-temperature storage and cycling performance, and float charge performance of nickel-containing positive electrode active materials at high voltage.

Additional aspects and advantages of the embodiments of this application are partly described and presented in subsequent descriptions, or explained by implementation of the embodiments of this application.

## DESCRIPTION OF EMBODIMENTS

Embodiments of this application are described in detail below. The embodiments of this application should not be construed as limitations on the application.

Unless otherwise expressly indicated, the following terms used in this specification have the meanings described below.

The terms "about", "roughly", "substantially", and "approximately" used herein are intended to describe and represent small variations. When used in combination with an event or a circumstance, the term may refer to an example in which the exact event or circumstance occurs or an example in which an extremely similar event or circumstance occurs. For example, when used in combination with a value, the term may refer to a variation range of less than or equal to $\pm 10\%$ of the value, for example, less than or equal to $\pm 5\%$, less than or equal to $\pm 4\%$, less than or equal to $\pm 3\%$, less than or equal to $\pm 2\%$, less than or equal to $\pm 1\%$, less than or equal to $\pm 0.5\%$, less than or equal to $\pm 0.1\%$, or less than or equal to $\pm 0.05\%$. For example, if a difference between two numerical values is less than or equal to $\pm 10\%$ of an average numerical value of the numerical values (for example, less than or equal to $\pm 5\%$, less than or equal to $\pm 4\%$, less than or equal to $\pm 3\%$, less than or equal to $\pm 2\%$, less than or equal to $\pm 1\%$, less than or equal to $\pm 0.5\%$, less than or equal to $\pm 0.1\%$, or less than or equal to $\pm 0.05\%$), the two numerical values may be considered "roughly" the same.

In the specific embodiments and claims, an item list connected by the terms "at least one of", "at least one piece of", "one kind or more of", "one or more of", or other similar terms may mean any combination of the listed items. For example, if items A and B are listed, the phrase "one or more of A and B" means only A, only B, or A and B. In another example, if items A, B, and C are listed, the phrase "one or more of A, B, or C" means only A; only B; only C; A and B (exclusive of C); A and C (exclusive of B); B and C (exclusive of A); or all of A, B, and C. The item A may include a single element or a plurality of elements. The item B may include a single element or a plurality of elements. The item C may contain a single element or a plurality of elements.

Further, for ease of description, "first", "second", "third", and the like may be used herein to distinguish between different components in a figure or a series of figures. Unless otherwise specified or limited, "first", "second", "third", and the like are not intended to describe corresponding components.

In the field of electrochemical energy storage, to pursue optimal energy density, the industry has attempted to adopt nickel-containing positive electrode active materials with high energy density to replace traditional positive electrode active materials. Nickel-containing positive electrode active materials include, but are not limited to, lithium nickel cobalt manganese oxide, lithium-rich manganese-based materials, lithium nickelate, lithium nickel manganese oxides, and the like. Nickel materials, due to their high energy density and operating potential, along with the abundant availability of nickel resources, offer a significant cost advantage over high-cobalt-amount materials. This makes nickel-containing positive electrode active materials highly promising positive electrode active materials. However, when such high-energy-density nickel-containing positive electrode active materials are applied, in a high-voltage environment, high-nickel-amount positive electrode active materials are prone to severe phase transition oxygen release, which seriously affects the high-temperature storage and cycling performance, and safety performance of electrochemical apparatuses.

To alleviate the foregoing issues, improving high-temperature storage and cycling performance through the electrolyte is one of the most economical and reliable ways, and hence has been widely adopted by researchers. The fluoroethylene carbonate (FEC) additive can form a very stable low-impedance solid electrolyte interface (SEI) film on the negative electrode, significantly improving the cycling performance of the battery and reducing thickness swelling and gas generation during cycling. However, fluoroethylene carbonate has a high highest occupied molecular orbital (Highest Occupied Molecular Orbital, HOMO) energy level, and under high-voltage operation, high-nickel-amount positive electrode active materials are prone to further oxidation with excessive fluoroethylene carbonate and generate gas, and the gas may break through the pouch package of electrochemical apparatuses. Meanwhile, under high-voltage operation, a higher nickel amount in the positive electrode active material will lead to a more severe defluorination and dehydrogenation reactions of fluoroethylene carbonate, leading to SEI film damage and transition metal dissolution, significantly worsening the high-temperature storage, float charge performance, cycling performance, intermittent cycling performance, and safety performance of electrochemical apparatuses under high voltage.

In view of the above issues, according to a first aspect of this application, some embodiments of this application provide an electrochemical apparatus, where the electrochemical apparatus includes: a positive electrode, an electrolyte, and a negative electrode, where the positive electrode includes a positive electrode active material layer, and the positive electrode active material layer includes a positive electrode active material, where the positive electrode active material includes a nickel-containing positive electrode active material; and the electrolyte includes fluoroethylene carbonate (FEC). In this application, through the controlling of the amount of the element nickel in the positive electrode active material layer, the amount of fluoroethylene carbonate in the electrolyte, and the maximum charge cut-off voltage, the high-temperature storage performance, float charge performance, cycling performance, intermittent cycling performance, and safety performance of the electrochemical apparatus are effectively improved. In some embodiments, a molar ratio of nickel in the nickel-containing positive electrode active material is x; and based on a total mass of the electrolyte, a mass percentage of fluoroethylene carbonate is a%. In this application, a charge cut-off voltage U V of the electrochemical apparatus, a molar ratio x of nickel in the lithium nickel oxide, and the mass percentage a% of the fluoroethylene carbonate in the electrolyte satisfy the following relationship:

$$a \leq \frac{2.3}{x^{0.7}} - 6x^{0.1}(U - 4.2)$$

.

In some embodiments, the charge cut-off voltage U of the electrochemical apparatus is in a range of 4.2 V to 5.5 V

Positive electrode

The positive electrode includes a positive electrode current collector and a positive electrode active material layer. The positive electrode current collector may be an aluminum foil or a nickel foil. However, other positive electrode current collectors commonly used in the art may be used without limitation. In some embodiments, the positive electrode active material is a nickel-containing positive electrode active material.

In some embodiments, the nickel-containing positive electrode active material includes lithium nickel oxide.

In some embodiments, the lithium nickel oxide includes a compound represented by a general formula $LiNi_xMl_yM2_zO_2$ or $n[Li_2MnO_3]$ (1-n) $[LiNi_xMl_yM2_zO_2]$, where M1 and M2 include one or more selected from a group consisting of Co, Mn, Al, Mg, Ti, or Zr, $0.3 \leq x \leq 1$, $0 \leq y \leq 0.7$, $0 \leq z \leq 0.7$, and $0 \leq n < 1$.

In some embodiments, x in the lithium nickel oxide satisfies $0.3 < x \leq 1$. In some embodiments, x satisfies $0.5 \leq x \leq 0.8$. In some embodiments, x is 0.33, 0.5, 0.6, 0.8, 0.9, or in a range of any two of these values.

In some embodiments, the lithium nickel oxide includes one or more selected from a group consisting of $LiNi_xCo_yMn_zO_2$, $LiNiO_2$, $LiNi_xMn_yO_2$, and $n[Li_2MnO_3] \cdot (1-n)$ $[LiNi_xMl_yM2_zO_2]$.

In some embodiments, the positive electrode active material may have a coating layer on its surface, or may be mixed with another compound having a coating layer. In some embodiments, the coating may include at least one compound of a coating element selected from oxides of the coating element, hydroxides of the coating element, oxyhydroxides of the coating element, oxycarbonates (oxycarbonate) of the coating element, and hydroxycarbonates (hydroxycarbonate) of the coating element. In some embodiments, the compound used for the coating layer may be amorphous or crystalline. In some embodiments, the coating element contained in the coating layer may include Mg, Al, Co, K, Na, Ca, Si, Ti, V, Sn, Ge, Ga, B, As, Zr, or a combination thereof. Persons skilled in the art should understand that, without departing from the spirit of this application, the coating can be applied by any method, as long as the method does not adversely affect the performance of the positive electrode active material. For example, the method may include any coating method well known to those skilled in the art, such as spraying, dipping, and the like.

In some embodiments, the positive electrode active material layer may further include a binder. Persons skilled in the art should understand that, without departing from the spirit of this application, the binder may be any suitable binder material known in the art. In some examples, the binder includes, but is not limited to, one or more selected from a group consisting of polyvinyl alcohol, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, styrene-butadiene rubber, acrylic styrene-butadiene rubber, epoxy resin, nylon, and the like.

In some embodiments, the positive electrode active material layer may further include a conductive agent. Persons skilled in the art should understand that, without departing from the spirit of this application, the binder may be any suitable conductive agent material known in the art. In some examples, the conductive agent includes, but is not limited to, one or more selected from a group consisting of a carbon-based material (for example, at least one or more selected from a group consisting of natural graphite, artificial graphite, carbon black, acetylene black, Ketjenblack, and carbon fibers), a metal material (for example, at least one or more selected from a group consisting of metal powder and metal fibers, including elemental copper, elemental aluminum, and elemental silver), and a conductive polymer (for example, a polyphenylene derivative).

Electrolyte

The electrolyte also includes an organic solvent and a lithium salt. Without departing from the spirit of this application, the specific types of the lithium salt and the organic solvent are not limited. In some embodiments, the organic solvent may include one or more selected from a group consisting of chain carbonate, cyclic carbonate, linear carboxylate, cyclic carboxylate, and ether. Examples of the organic solvent include, but are not limited to, one or more selected from a group consisting of dimethyl carbonate, ethyl methyl carbonate, methyl propyl carbonate, methyl isopropyl carbonate, methyl butyl carbonate, diethyl carbonate, dipropyl carbonate, dibutyl carbonate, ethylene carbonate, propylene carbonate, butylene carbonate, methyl acetate, ethyl acetate, propyl acetate, butyl acetate, methyl propionate, ethyl propionate, propyl propionate, butyl propionate, methyl butyrate, ethyl butyrate, propyl butyrate, methyl valerate, ethyl valerate, methyl pivalate, ethyl pivalate, butyl pivalate, $\gamma$-butyrolactone, and $\gamma$-valerolactone. In some embodiments, the lithium salt may be selected from one or more of a group consisting of an inorganic lithium salt and an organic lithium salt. In some embodiments, examples of the lithium salt include, but are not limited to, one or more of a group consisting of lithium hexafluorophosphate ($LiPF_6$), lithium tetrafluoroborate ($LiBF_4$), lithium hexafluoroarsenate, lithium perchlorate, lithium bis(trifluoromethanesulfonyl)imide (LiFSI), lithium bis(trifluoromethanesulfonyl)imide (LiTFSI), lithium bis(oxalatoborate) (LiBOB), and lithium difluorooxalatoborate (LiODFB). In some embodiments, the lithium salt is lithium hexafluorophosphate ($LiPF_6$).

In some embodiments, the additive that can be used in the electrolyte of the embodiments of this application include, but are not limited to, a sulfur-oxygen double-bond compound, lithium difluorophosphate, and a polycyan compound.

In some embodiments, the electrolyte also includes a sulfur-oxygen double-bond compound. Through the addition of a sulfur-oxygen double-bond compound to the electrolyte, a stable SEI film can be formed on the positive electrode surface, optimizing its inhibition of phase transitions in nickel-containing positive electrode active materials, enhancing the structural stability of the positive electrode, thereby suppressing the decay of the positive electrode active material layer structure at high voltage and the resulting side reactions with the electrolyte. This enables the electrochemical apparatus to exhibit better electrical performance and safety performance. In some embodiments, the sulfur-oxygen double-bond compound includes one or more selected from a group consisting of 1,3-propane sultone (PS), 2,4-butane sultone, 1,4-butane sultone, diethyl sulfate (DTD), propylene-1,3-sultone (PES), methylene disulfonate (MMDS), vinyl sulfone (DVS), 1,2,6-oxadithiane, 2,2,6,6-tetraoxide (CAS: 4720-58-5), 4-methylethylene sulfate (PCS), 3-cyclobutene sulfone, dihydro-1,3,2-dioxathiacyclo[1,3,2]dioxathiacyclo-2,2,5,5-tetraoxide (CAS: 496-45-7), and pentaerythritol bicyclic sulfate compounds.

In some embodiments, based on the total mass of the electrolyte, the mass percentage a% of fluoroethylene carbonate in the electrolyte is in a range of 0.05% to 5.3%, for example, it can be 0.2, 0.5, 1, 1.5, 2, 2.5, 3, 3.5, 4, 5, or in a range of any two of these values.

In some embodiments, based on the total mass of the electrolyte, a total mass percentage of the sulfur-oxygen double-bond compound is b%, where the total mass percentage b% of the sulfur-oxygen double-bond compound and the mass percentage a% of the fluoroethylene carbonate satisfy the following relationship: $0.02 \leq \frac{b}{a} \leq 5$. In some embodiments, the total mass percentage b% of the sulfur-oxygen double-bond compound and the mass percentage a% of fluoroethylene carbonate satisfy the following relationship: $0.25 \leq \frac{b}{a} \leq 3$. In some embodiments, b/a may be 0.25, 0.5, 1, 1.5, 2, 2.5, 3, or in a range of any two of these values.

In some embodiments, based on the total mass of the electrolyte, the total mass percentage b% of the sulfur-oxygen double-bond compound is in a range of 0.1% to 5%. In some embodiments, the total mass percentage b% of the sulfur-oxygen double-bond compound is in a range of 0.5% to 3%. In some embodiments, b% is 0.5, 1, 1.5, 2, 2.5, 3, 3.5, 4, 4.5, 5, or in a range of any two of these values.

In some embodiments, the organic solvent in the electrolyte is a linear carbonate, where the linear carbonate is selected from at least one of dimethyl carbonate, diethyl carbonate, or ethyl methyl carbonate. In some embodiments, the organic solvent is selected from at least one of diethyl carbonate or ethyl methyl carbonate, excluding dimethyl carbonate. With the linear carbonate with lower molecular molar mass, such as dimethyl carbonate, removed from the electrolyte, the side reactions between the nickel-containing positive electrode active material and the organic solvent in the electrolyte can be reduced, lowering the consumption of the electrolyte and the interfacial resistance.

In some embodiments, based on the total mass of the organic solvent, a percentage of the linear carbonate is less than or equal to 70%. In some embodiments, based on the total mass of the electrolyte, the percentage of the linear carbonate is less than or equal to 60%.

In some embodiments, based on the total mass of the electrolyte, the mass percentage of linear carbonates with molecular molar mass greater than 100, such as, but not limited to, diethyl carbonate or ethyl methyl carbonate, is c%, where the mass percentage c% of linear carbonates with molecular molar mass greater than 100 and the mass percentage a% of fluoroethylene carbonate satisfy the following relationship: $4 \leq \frac{c}{a} \leq 600$. In some embodiments, the mass percentage c% of the linear carbonates with molecular molar mass greater than 100 and the mass percentage a% of fluoroethylene carbonate satisfy the following relationship: $10 \leq \frac{c}{a} \leq 60$, which can further optimize the performance of the electrochemical apparatus using nickel-containing positive electrode active materials. In some embodiments, c/a may be 5, 10, 20, 30, 60, or in a range of any two of these values.

In some embodiments, based on the total mass of the electrolyte, the mass percentage c% of the linear carbonates with molecular molar mass greater than 100 is in a range of 20% to 60%. In some embodiments, c% is 20%, 30%, 40%, 50%, 60%, or in a range of any two of these values.

In some embodiments, the electrolyte further includes lithium difluorophosphate as an additive to enhance the protection for the interfaces of the positive electrode active layer and the negative electrode active layer, optimizing the electrical performance of the electrochemical apparatus. In some embodiments, based on the total mass of the electrolyte, a mass percentage of the additive lithium difluorophosphate is d%, where the mass percentage d% of the additive lithium difluorophosphate and the molar ratio x of nickel in the lithium nickel oxide satisfy the following relationship:

$$0.3 \leq \frac{x}{d} \leq 100$$

. In some embodiments, x/d may be 0.6, 1.0, 1.2, 1.6, 1.8, 2.0, 6.0, 60, or in a range of any two of these values.

In some embodiments, based on the total mass of the electrolyte, the mass percentage d% of the additive lithium difluorophosphate is in a range of 0.01% to 1%. In some embodiments, d% is 0.01%, 0.1%, 0.3%, 0.5%, 1.0%, or in a range of any two of these values.

In some embodiments, the electrolyte further includes a polycyan compound, and the polycyan compound includes one or more selected from a group consisting of a dinitrile compound, a trinitrile compound, and a tetranitrile compound.

In some embodiments, the dinitrile compound includes one or more selected from a group consisting of succinonitrile, adiponitrile, 1,2-bis(cyanoethoxy)ethane, and 1,4-dicyano-2-butene; the trinitrile includes one or more selected from a group consisting of 1,3,6-hexanetrinitrile and 1,2,3-tris(2-cyano)propane; and the tetranitrile includes one or more selected from a group consisting of 1,1,3,3-propanetetracarbonitrile, 1,1,2,2-ethanetetracarbonitrile, 4-(2-cyanoethyl)-4-cyanopimelanitrile, and pentane-1,3,3,5-tetracarbonitrile.

In some embodiments, based on the total mass of the electrolyte, a mass percentage of the polycyan compound is in a range of 0.1% to 5%.

Negative electrode

The negative electrode includes a current collector and a negative electrode active material layer provided on the current collector. The specific types of the negative electrode active material are not subject to specific restrictions, and can be selected according to requirements.

In some embodiments, the negative electrode active material is one or more selected from a group consisting of natural graphite, artificial graphite, mesocarbon microbeads (MCMB for short), hard carbon, soft carbon, silicon, a silicon-carbon composite, a Li-Sn alloy, a Li-Sn-O alloy, Sn, SnO, $SnO_2$, spinel-structure lithiated $TiO_2$-$Li_4Ti_5O_{12}$, and a Li-Al alloy.

Non-limiting examples of the carbon material include crystalline carbon, amorphous carbon, and a mixture thereof. The crystalline carbon may be amorphous, plate-shaped, flake-shaped, spherical or fiber-shaped natural graphite or artificial graphite. The amorphous carbon may be soft carbon, hard carbon, a mesophase pitch carbonization product, burnt coke, and the like.

In some embodiments, the negative electrode active material layer may include a binder, and optionally include a conductive material.

The binder improves bonding between particles of the negative electrode active material, and bonding between the negative electrode active material and the current collector. Non-limiting examples of the binder include polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, acrylic styrene-butadiene rubber, epoxy resin, nylon, and the like.

The negative electrode active material layer includes a conductive material, thereby imparting conductivity to the electrode. The conductive material may include any conductive material that causes no chemical change. Non-limiting examples of the conductive material include a carbon-based material (for example, natural graphite, artificial graphite, carbon black, acetylene black, Ketjen black, and carbon fibers), a metal-based material (for example, metal powder and metal fibers, including copper, nickel, aluminum, and silver), a conductive polymer (for example, a polyphenylene derivative), and a mixture thereof.

The negative electrode current collector in this application may be selected from copper foil, nickel foil, stainless steel foil, titanium foil, nickel foam, copper foam, a polymer substrate coated with conductive metal, and any combination thereof.

Separator

A separator may be provided between the positive electrode and the negative electrode to prevent a short circuit. A material and shape of the separator that can be used in the embodiments of this application is not specifically limited, and any technology disclosed in the prior art may be used for the separator. In some embodiments, the separator includes a polymer or an inorganic substance formed by a material stable to the electrolyte of this application.

For example, the separator may include a substrate layer and a surface treatment layer. The substrate layer is a non-woven fabric, a membrane, or a composite membrane having a porous structure, and a material of the substrate layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic layer, or may be a layer formed by a mixed polymer and an inorganic substance.

The inorganic layer includes inorganic particles and a binder. The inorganic particles are selected from one or a combination of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from one or a combination of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene.

The polymer layer includes a polymer, and a material of the polymer is selected from at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

Without departing from the spirit of this application, the structure of the electrode assembly in the electrochemical apparatus of this application may be the structure of any suitable electrode assembly known in the art, without limitation. In some embodiments, the electrode assembly is a wound structure. In some embodiments, the electrode assembly may be a laminated structure or a multi-tab structure. In some embodiments, the electrochemical apparatus is a lithium-ion battery.

It should be understood that the methods for preparing the positive electrode, the separator, the negative electrode, and the electrolyte in the embodiments of this application may be selected from any suitable conventional methods known in the art according to specific needs, without limitation, as long as they do not depart from the spirit of this application. In one embodiment of the method for manufacturing the electrochemical apparatus, the method for preparing the lithium-ion battery includes: winding, folding, or stacking the negative electrode, separator, and positive electrode in sequence to form an electrode assembly, then placing the electrode assembly into a housing, such as an aluminum-plastic film, and injecting the electrolyte, followed by subsequent vacuum packaging, standing, formation, and shaping processes to obtain the lithium-ion battery.

According to another aspect of this application, some embodiments of this application further provide an electronic apparatus, where the electronic apparatus includes the electrochemical apparatus in the embodiments of this application.

The electronic apparatus in the embodiments of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

The following uses a lithium-ion battery as an example and describes preparation of a lithium-ion battery with reference to specific examples. A person skilled in the art understands that the preparation method described in this application is only an example, and that all other suitable preparation methods fall within the scope of this application.

## Examples

The following describes performance evaluation performed based on examples and comparative examples of the lithium-ion battery in this application. **I.**

## Preparation of lithium-ion battery

1. Preparation of positive electrode

A positive electrode active material, a conductive agent Super P, and a binder polyvinylidene fluoride were mixed at a weight ratio of 97:1.4:1.6, added with N-methyl-2-pyrrolidone (NMP), and the obtained mixture was stirred to a uniform transparent system by using a vacuum stirrer to obtain a positive electrode slurry, where a solid content of the positive electrode slurry was 72wt%. The positive electrode slurry was evenly applied onto an aluminum foil of a positive electrode current collector. The aluminum foil was dried at 85°C to form a positive electrode active material layer. Then, after cold pressing, cutting, and slitting, drying was performed in a vacuum at 85°C for 4 h to obtain the positive electrode. The specific types and nickel amount of the positive electrode active materials used in the positive electrode were detailed in the examples.

(2) Preparation of negative electrode

A negative electrode active material artificial graphite, a conductive agent Super P, a thickener sodium carboxymethyl cellulose (CMC), and a binder styrene-butadiene rubber (SBR) were mixed at a weight ratio of 96.4:1.5:0.5:1.6, added with deionized water, and the obtained mixture was stirred by using a vacuum stirrer to obtain a negative electrode slurry, where a solid content of the negative electrode slurry was 54wt%. The negative electrode slurry was evenly applied onto a copper foil of a negative electrode current collector. The copper foil was dried at 85°C. Then, after cold pressing, cutting, and slitting, drying was performed in a vacuum at 120°C for 12 h to obtain a negative electrode plate.

(3) Preparation of electrolyte

In a dry argon atmosphere glove box, organic solvents were mixed, added with an additive. After the additive was dissolved, the obtained mixture was fully stirred, and then added with lithium salt $LiPF_6$. The former substances were mixed to uniformity to obtain the electrolyte, where a concentration of $LiPF_6$ is 1 mol/L. The specific types and amounts of organic solvents and additives used in the electrolyte were detailed in the examples, and the amounts of additives were mass percentages calculated based on the total mass of the electrolyte.

(4) Preparation of separator

A 7$\mu$m thick polyethylene (PE) separator was used.

(5) Preparation of lithium-ion battery

The positive electrode plate, the separator, and the negative electrode plate were stacked in sequence so that the separator was sandwiched between the positive electrode plate and the negative electrode plate for separation. Then, the resulting stack was wound to form a jelly roll. After the tabs were welded, the jelly roll was placed in an outer packaging aluminum-plastic film. The prepared electrolyte was injected into the dried jelly roll, followed by processes such as vacuum packaging, standing, formation (0.02C constant current charging to 3.3 V, then 0.1C constant current charging to 3.6 V), shaping, capacity testing, and other processes to obtain a pouch lithium-ion battery (thickness 3.3mm, width 39mm, length 96mm).

**II. Test method**

**(1) Cycling performance test on lithium-ion battery at 45°C**

The lithium-ion battery was placed in a 45°C thermostat and left there for 30 minutes so that the lithium-ion battery reached a constant temperature. The lithium-ion battery that had reached a constant temperature was charged at a constant current of 1C to the charge cut-off voltage U V, then charged at a constant voltage of the charge cut-off voltage U V to a current of 0.05C, and then discharged at a constant current of 1C to a voltage of 2.8 V This was one charge and discharge cycle. The first cycle discharge capacity was defined as 100%. The charge and discharge cycle was repeated until the discharge capacity decayed to 80%. Then the number of cycles was recorded as an indicator for evaluating the cycling performance of the lithium-ion battery.

**(2) High-temperature storage test of lithium-ion battery**

The lithium-ion battery was placed in a 25°C thermostat and left there for 30 minutes so that the lithium-ion battery reached a constant temperature. The lithium-ion battery was charged to the charge cut-off voltage U V at a constant current of 1C, then charged to a current of 0.05C at a constant voltage, and discharged to 2.8 V at a constant current of 1C. The discharge capacity was recorded as an initial capacity of the lithium-ion battery. Then the lithium-ion battery was charged to the charge cut-off voltage U V at a constant current of 0.5C, and charged to a current of 0.05C at a constant voltage. A thickness of the battery was measured with a micrometer and recorded. The lithium-ion battery under test was transferred into a 60°C thermostat and stored there for 90 days. During this period, the thickness of the battery was measured and recorded every 3 days. After 90 days of storage, the battery was transferred into a 25°C thermostat, left standing for 60 minutes, and discharged to 2.8 V at a constant current of 1C. The discharge capacity then was recorded as a remaining capacity of the lithium-ion battery. The lithium-ion battery was charged to 4.45 V at a constant current of 1C, then charged to a current of 0.05C at a constant voltage, and discharged to 2.8 V at a constant current of 1C. The discharge capacity was recorded as a recoverable capacity of the lithium-ion battery. THK-Thickness (thickness), OCV-Open circuit voltage (open circuit voltage), and IMP-Impedance (impedance) of the battery cell were tested. A storage thickness swelling rate of the lithium-ion battery was calculated and used as an indicator for evaluating gas production of the lithium-ion battery under high-temperature storage.

Thickness swelling rate = (thickness after 24 hours of storage - initial thickness)/initial thickness $\times$ 100%.

### (3) Direct current resistance DCR test of lithium-ion battery at 0°C

The lithium-ion battery was placed in a 0°C high-low temperature box and left standing for 4 h, so that the lithium-ion battery reached a constant temperature. The lithium-ion battery was charged to U V at a constant current of 0.1C, then charged to a current of 0.05C at a constant voltage, left standing for 10 min, and then discharged to 3.4 V at a constant current of 0.1C. A capacity at this step was recorded as an actual discharge capacity $D_0$. Then the lithium-ion battery was left standing for 5 min, charged to the cut-off voltage UV at a constant charge current of 0.1C, charged to a current of 0.05C (the current was calculated based on a capacity corresponding to $D_0$) at a constant voltage, left standing for 10 min, and then discharged at a constant current of 0.1C for 3 h (the current was calculated based on the capacity corresponding to $D_0$). A voltage V1 at this time was recorded. Then the lithium-ion battery was discharged at a constant current of 1C for 1S (a sample was collected every 10 ms, and the current was correspondingly calculated based on a marked capacity of the battery cell). A voltage V2 at this time was recorded. A direct current resistance corresponding to a 70% SOC state of the battery cell was calculated, and the calculation formula is as follows:

$$70\% \text{ SOC DCR} = (V2 - V1)/1C.$$

### (4) Overcharge test of lithium-ion battery

The lithium-ion battery was discharged to 2.8 V at 0.5C at 25°C, then charged to 5.7 V at a constant current of 3C, and charged at a constant voltage for 3 h. Surface temperature changes of the battery cell were monitored, and the pass criterion is that the battery cell did not catch fire, burn, or explode.

### (5) Calendar life (ITC test) of lithium-ion battery

The lithium-ion battery was placed in a 45°C thermostat and left there for 30 minutes so that the lithium-ion battery reached a constant temperature. The lithium-ion battery that had reached a constant temperature was charged to the charge cut-off voltage U V at a constant current of 1C, and then charged to a current of 0.05C at a constant voltage of U V. An initial thickness of the battery was measured with a micrometer and recorded. The lithium-ion battery was left standing for 24 h at 45°C, and then discharged to a voltage of 2.8 V at a constant current of 1C. This was one charge and discharge cycle. The first cycle discharge capacity was defined as 100%. The charge and discharge cycle was repeated until the discharge capacity decayed to 80%. Before the test was stopped, the lithium-ion battery was placed in a 25°C thermostat and left standing for 30 minutes, so that the lithium-ion battery reached a constant temperature. The lithium-ion battery that had reached a constant temperature was charged to a voltage of U V at a constant current of 1C, and then charged to a current of 0.05C at a constant voltage of U V (a thickness after cycles of the battery was measured with the micrometer and recorded). The number of cycles was recorded as an indicator for evaluating calendar life of the lithium-ion battery.

Thickness swelling rate = [(thickness after cycles - initial thickness)/initial thickness] * 100%.

### (6) Float charge performance test (CV test) of lithium-ion battery

The lithium-ion battery was placed in a 25°C thermostat and left there for 30 minutes so that the lithium-ion battery reached a constant temperature. The lithium-ion battery was charged to a voltage of U V at a constant current of 1C, and then charged to a current of 0.05C at a constant voltage. An initial thickness of the battery was measured with a micrometer and recorded. The lithium-ion battery under test was transferred into a 45°C thermostat and constantly charged at a current of 1C for 60 days. After that, the battery was transferred into a 25°C thermostat, and the thickness of the battery was tested and recorded. A thickness swelling rate of the lithium-ion battery during the float charge test was calculated and used as an indicator for evaluating float charge performance of the lithium-ion battery.

Thickness swelling rate = (thickness after 60 days of float charge - initial thickness)/initial thickness $\times$ 100%.

### III. Test results

Table 1 shows the effects of the amount of nickel in the positive electrode active material, the charge cut-off voltage, and the amount of fluoroethylene carbonate (FEC) in the electrolyte on the impedance, cycle capacity retention rate, and high-temperature storage swelling rate of the lithium-ion battery. The positive electrode active materials used in examples and comparative examples in Table 1 were lithium nickel manganese cobalt ternary materials represented by the general formula $LiNi_xCo_yMn_zO_2$, specifically $LiNi_{0.33}Co_{0.33}Mn_{0.33}O_2$, $LiNi_{0.5}Co_{0.2}Mn_{0.3}O_2$, $LiNi_{0.6}Co_{0.1}Mn_{0.3}O_2$, $LiNi_{0.8}Co_{0.1}Mn_{0.1}O_2$, and $LiNi_{0.9}Co_{0.05}Mn_{0.05}O_2$. The components of the organic solvents in the electrolytes used in examples and comparative examples in Table 1 were ethylene carbonate (EC), propylene carbonate (PC), ethyl methyl carbonate (EMC), and diethyl carbonate (DEC) mixed at a mass ratio of EC:EMC:DEC=20:20:20:40, and the additive fluoroethylene carbonate was included.

**Table 1**

| | Ni Amount x in Active Material | Charge Cut-off Voltage U (V) | a(max) | FEC Percentage a(%) | Cycles at 25°C | Cycling Thickness Swelling Rate at 25°C (%) | Cycles at 45°C | Cycling Thickness Swelling Rate at 45°C (%) | Cycles for ITC at 45°C | Thickness Swelling Rate after 90 Days Storage at 60°C (%) | Thickness Swelling Rate after 60 Days CV at 45°C (%) |
|---|---|---|---|---|---|---|---|---|---|---|---|
| Comparative example 1-1 | 0.33 | 4.45 | 3.7 | 5 | 357 | 13 | 216 | 15 | 46 | 25 | 36 |
| Comparative example 1-2 | 0.5 | 4.45 | 2.3 | 5 | 338 | 14 | 210 | 16 | 42 | 35 | 48 |
| Comparative example 1-3 | 0.6 | 4.45 | 1.9 | 5 | 314 | 15 | 187 | 17 | 38 | 52 | 65 |
| Comparative example 1-4 | 0.8 | 4.45 | 1.2 | 5 | 235 | 17 | 103 | 25 | 21 | 97 | 101 |
| Comparative example 1-5 | 0.9 | 4.45 | 1.0 | 5 | 137 | 21 | 80 | 35 | 16 | 139 | 168 |
| Comparative example 1-6 | 0.8 | 4.3 | 2.1 | 5 | 387 | 15 | 242 | 18 | 42 | 62 | 62 |
| Comparative example 1-7 | 0.9 | 4.3 | 1.9 | 5 | 314 | 18 | 179 | 20 | 31 | 51 | 81 |
| Example 1-1 | 0.33 | 4.20 | 5.3 | 5 | 703 | 8 | 365 | 10 | 82 | 20 | 22 |
| Example 1-2 | 0.33 | 4.35 | 4.5 | 3 | 579 | 10 | 356 | 11 | 65 | 12 | 17 |
| Example 1-3 | 0.33 | 4.40 | 4.3 | 2 | 512 | 12 | 312 | 14 | 62 | 11 | 15 |
| Example 1-4 | 0.33 | 4.45 | 4.0 | 1 | 451 | 12 | 265 | 13 | 56 | 10 | 12 |
| Example 1-5 | 0.33 | 4.50 | 3.7 | 1 | 422 | 13 | 256 | 15 | 59 | 12 | 18 |
| Example 1-6 | 0.5 | 4.20 | 3.7 | 3.5 | 683 | 10 | 411 | 12 | 76 | 17 | 21 |
| Example 1-7 | 0.5 | 4.35 | 2.9 | 2 | 536 | 12 | 322 | 13 | 56 | 15 | 16 |
| Example 1-8 | 0.5 | 4.40 | 2.6 | 1 | 489 | 12 | 299 | 13 | 52 | 12 | 15 |
| Example 1-9 | 0.5 | 4.45 | 2.3 | 1 | 465 | 13 | 281 | 13 | 47 | 14 | 16 |
| Example 1-10 | 0.5 | 4.50 | 2.1 | 1 | 411 | 14 | 242 | 14 | 46 | 16 | 18 |
| Example 1-11 | 0.6 | 4.20 | 3.3 | 3 | 653 | 11 | 390 | 12 | 70 | 19 | 20 |

(continued)

| | Ni Amount x in Active Material | Charge Cut-off Voltage U (V) | a(max) | FEC Percentage a(%) | Cycles at 25°C | Cycling Thickness Swelling Rate at 25°C (%) | Cycles at 45°C | Cycling Thickness Swelling Rate at 45°C (%) | Cycles for ITC at 45°C | Thickness Swelling Rate after 90 Days Storage at 60°C (%) | Thickness Swelling Rate after 60 Days CV at 45°C (%) |
|---|---|---|---|---|---|---|---|---|---|---|---|
| Example 1-12 | 0.6 | 4.35 | 2.4 | 2 | 642 | 11 | 386 | 12 | 51 | 14 | 18 |
| Example 1-13 | 0.6 | 4.4 | 2.1 | 1.5 | 601 | 11 | 357 | 12 | 48 | 13 | 17 |
| Example 1-14 | 0.6 | 4.45 | 1.9 | 1 | 511 | 12 | 312 | 12 | 45 | 13 | 15 |
| Example 1-15 | 0.6 | 4.5 | 1.6 | 1 | 467 | 13 | 282 | 14 | 42 | 15 | 18 |
| Example 1-16 | 0.8 | 4.2 | 2.7 | 2.5 | 575 | 10 | 344 | 13 | 51 | 18 | 7 |
| Example 1-17 | 0.8 | 4.35 | 1.8 | 1.5 | 521 | 10 | 321 | 14 | 50 | 14 | 15 |
| Example 1-18 | 0.8 | 4.4 | 1.5 | 1 | 487 | 10 | 297 | 13 | 48 | 13 | 15 |
| Example 1-19 | 0.8 | 4.45 | 1.2 | 1 | 438 | 11 | 272 | 14 | 46 | 18 | 20 |
| Example 1-20 | 0.8 | 4.5 | 0.9 | 0.5 | 391 | 13 | 224 | 15 | 44 | 19 | 20 |
| Example 1-21 | 0.9 | 4.2 | 2.5 | 2.5 | 541 | 14 | 323 | 16 | 46 | 17 | 19 |
| Example 1-22 | 0.9 | 4.35 | 1.6 | 1.5 | 513 | 14 | 312 | 16 | 46 | 16 | 20 |
| Example 1-23 | 0.9 | 4.4 | 1.3 | 1 | 487 | 14 | 286 | 15 | 45 | 17 | 20 |
| Example 1-24 | 0.9 | 4.45 | 1.0 | 1 | 421 | 14 | 254 | 17 | 41 | 19 | 24 |

(continued)

| | Ni Amount x in Active Material | Charge Cut-off Voltage U (V) | a(max) | FEC Percentage a(%) | Cycles at 25°C | Cycling Thickness Swelling Rate at 25°C (%) | Cycles at 45°C | Cycling Thickness Swelling Rate at 45°C (%) | Cycles for ITC at 45°C | Thickness Swelling Rate after 90 Days Storage at 60°C (%) | Thickness Swelling Rate after 60 Days CV at 45°C (%) |
|---|---|---|---|---|---|---|---|---|---|---|---|
| Example 1-25 | 0.9 | 4.5 | 0.7 | 0.5 | 391 | 16 | 236 | 19 | 37 | 15 | 19 |

# EP 4 503 228 A1

The results show that limiting the nickel content in the positive electrode active material, the charge cut-off voltage, and the content of fluoroethylene carbonate (FEC) in the electrolyte plays a crucial role in improving the impedance, high-temperature storage swelling rate, and cycle capacity retention rate performance of the lithium-ion battery under high voltage working conditions. Specifically, as shown in Table 1, the charge cut-off voltage U V, the molar ratio x of nickel in the positive electrode active material, and the mass percentage a% of fluoroethylene carbonate in the electrolyte satisfying the following relationship: $a \leq \frac{2.3}{x^{0.7}} - 6x^{0.1}(U - 4.2)$ can effectively ensure that fluoroethylene carbonate forms a very stable solid electrolyte interface film on the negative electrode interface, and continually repairs the damage to the solid electrolyte interface film during the cycling process, thus achieving excellent cycling performance and minimal thickness swelling. Meanwhile, through the limiting of the ratio between the molar ratio x of nickel in the positive electrode active material and the mass percentage a% of fluoroethylene carbonate in the electrolyte, the high-temperature cycling performance and impedance performance of the lithium-ion battery at high charge cut-off voltage U can be improved, significantly reducing the impedance and high-temperature storage swelling rate of the lithium-ion battery under high voltage working conditions and significantly enhancing its cycle capacity retention rate. When the mass percentage a% of fluoroethylene carbonate in the electrolyte is in a range of 0.5% to 3.0%, the lithium-ion battery exhibits exceptionally excellent cycling and storage performance.

Table 2 shows the effects of the amount of nickel in the positive electrode active material, the charge cut-off voltage, the amount of fluoroethylene carbonate (FEC) in the electrolyte, and the addition of sulfur-oxygen double-bond compounds in the electrolyte on the impedance, cycle capacity retention rate, high-temperature storage swelling rate, and overcharge performance of the lithium-ion battery. The positive electrode active materials used in examples and comparative examples in Table 2 were lithium nickel manganese cobalt ternary materials represented by the general formula $LiNi_xCo_yMn_zO_2$, specifically $LiNi_{0.33}Co_{0.33}Mn_{0.33}O_2$, $LiNi_{0.5}Co_{0.2}Mn_{0.3}O_2$, $LiNi_{0.6}Co_{0.1}Mn_{0.3}O_2$, $LiNi_{0.8}Co_{0.1}Mn_{0.1}O_2$, and $LiNi_{0.9}Co_{0.05}Mn_{0.05}O_2$. The components of the organic solvents in the electrolytes used in examples and comparative examples in Table 2 were ethylene carbonate (EC), propylene carbonate (PC), ethyl methyl carbonate (EMC), and diethyl carbonate (DEC) mixed at a mass ratio of EC:EMC:DEC=20:20:20:40, and the additives fluoroethylene carbonate and sulfur-oxygen double-bond compounds were included. The specific types and mass percentages of sulfur-oxygen double-bond compounds are detailed in Table 2.

**Table 2**

| | Ni Amount x in Active Material | Charge Cut-off Voltage U (V) | a(max) | FEC Percentage a(%) | 1,3-Propane Sultone (PS) | Diethyl Sulfate (DTD) | Propylene-1,3-sultone (PES) | Methylene Disulfonate (MMDS) | Vinyl Sulfone (DVS) | Pentaerythritol Bicyclic Sulfate | Cycles at 45°C | Cycling Thickness Swelling Rate at 45°C | Cycles for ITC at 45°C | Thickness Swelling Rate after 90 Days Storage at 60°C (%) | Thickness Swelling Rate after 60 Days CV at 45°C (%) | 70% SOC DCR at 0°C (mΩ) | Number of Passes in 3C 5.7 V Overcharge Test |
|---|---|---|---|---|---|---|---|---|---|---|---|---|---|---|---|---|---|
| Example 1-3 | 0.33 | 4.4 | 3.9 | 2 | | | | | | | 312 | 62 | 16 | 11 | 15 | 106 | 2 |
| Comparative example 2-1 | 0.5 | 4.4 | 2.6 | 2 | | | | | | | 301 | 52 | 18 | 12 | 15 | 109 | 2 |
| Comparative example 2-2 | 0.6 | 4.4 | 2.1 | 2 | | | | | | | 269 | 49 | 20 | 17 | 19 | 111 | 2 |
| Example 1-18 | 0.8 | 4.4 | 1.5 | 1 | | | | | | | 297 | 48 | 24 | 13 | 15 | 115 | 0 |
| Example 1-23 | 0.9 | 4.4 | 1.3 | 1 | | | | | | | 286 | 45 | 27 | 17 | 20 | 118 | 0 |
| Example 2-1 | 0.33 | 4.4 | 3.9 | 2 | 3 | | | | | | 518 | 88 | 12 | 8 | 10 | 105 | 7 |
| Example 2-2 | 0.5 | 4.4 | 2.6 | 2 | 3 | | | | | | 479 | 82 | 14 | 9 | 11 | 107 | 7 |
| Example 2-3 | 0.6 | 4.4 | 2.1 | 2 | 3 | | | | | | 441 | 77 | 16 | 10 | 12 | 109 | 6 |
| Example 2-4 | 0.8 | 4.4 | 1.5 | 1 | 3 | | | | | | 375 | 65 | 18 | 9 | 10 | 113 | 4 |
| Example 2-5 | 0.9 | 4.4 | 1.3 | 1 | 3 | | | | | | 330 | 60 | 19 | 10 | 13 | 115 | 4 |
| Example 2-6 | 0.6 | 4.4 | 2.1 | 2 | | 0.5 | | | | | 507 | 79 | 13 | 12 | 14 | 104 | 5 |
| Example 2-7 | 0.6 | 4.4 | 2.1 | 2 | | | 0.5 | | | | 543 | 85 | 10 | 6 | 7 | 108 | 7 |

| | Ni Amount x in Active Material | Charge Cut-off Voltage U (V) | a(max) | FEC Percentage a(%) | 1,3-Propane Sultone (PS) | Diethyl Sulfate (DTD) | Propylene-1,3-sultone (PES) | Methylene Disulfonate (MMDS) | Vinyl Sulfone (DVS) | Pentaerythritol Bicyclic Sulfate | Cycles at 45°C | Cycling Thickness Swelling Rate at 45°C | Cycles for ITC at 45°C | Thickness Swelling Rate after 90 Days Storage at 60°C (%) | Thickness Swelling Rate after 60 Days CV at 45°C (%) | 70% SOC DCR at 0°C (mΩ) | Number of Passes in 3C 5.7 V Overcharge Test |
|---|---|---|---|---|---|---|---|---|---|---|---|---|---|---|---|---|---|
| Example 2-8 | 0.6 | 4.4 | 2.1 | 2 | | | | 0.5 | | | 576 | 88 | 11 | 10 | 11 | 105 | 5 |
| Example 2-9 | 0.6 | 4.4 | 2.1 | 2 | | | | | 0.5 | | 528 | 81 | 13 | 7 | 9 | 109 | 7 |
| Example 2-10 | 0.6 | 4.4 | 2.1 | 2 | | | | | | 0.5 | 523 | 83 | 11 | 10 | 12 | 106 | 5 |
| Example 2-11 | 0.6 | 4.4 | 2.1 | 2 | 3 | 0.5 | 0.5 | 0.5 | | | 768 | 114 | 9 | 7 | 8 | 101 | 9 |
| Example 2-12 | 0.33 | 4.4 | 3.9 | 2 | 3 | 0.5 | 0.5 | 0.5 | | | 865 | 135 | 8 | 5 | 7 | 95 | 10 |
| Example 2-13 | 0.5 | 4.4 | 2.6 | 2 | 3 | 0.5 | 0.5 | 0.5 | | | 817 | 123 | 8 | 7 | 8 | 98 | 10 |
| Example 2-14 | 0.8 | 4.4 | 1.5 | 1 | 3 | 0.5 | 0.5 | 0.5 | | | 648 | 97 | 10 | 8 | 9 | 99 | 8 |
| Example 2-15 | 0.9 | 4.4 | 1.3 | 1 | 3 | 0.5 | 0.5 | 0.5 | | | 509 | 89 | 13 | 9 | 10 | 101 | 8 |

The results in Table 2 show that the electrolyte can further include a sulfur-oxygen double-bond compound. The sulfur-oxygen double-bond compound can form a stable solid electrolyte interface film in the surface region of the positive electrode active material to improve the structural stability of the positive electrode active material, while also reducing the phase transitions and surface impedance of the positive electrode active material. On the basis that the charge cut-off voltage U V, the molar ratio x of nickel in the positive electrode active material, and the mass percentage a of fluoroethylene carbonate in the electrolyte satisfy the relationship $a \leq \dfrac{2.3}{x^{0.7}} - 6x^{0.1}(U - 4.2)$, the mass percentage b% of the sulfur-oxygen double-bond compound and the mass percentage a% of fluoroethylene carbonate satisfying the relationship $0.02 \leq \dfrac{b}{a} \leq 5$ is conducive to further reducing the impedance and high-temperature storage swelling rate of the lithium-ion battery under high voltage working conditions, further improving the cycle capacity retention rate and overcharge pass rate of the lithium-ion battery.

Table 3 shows the effects of the amount of nickel in the positive electrode active material, the charge cut-off voltage, the amount of fluoroethylene carbonate (FEC) in the electrolyte, and the types of organic solvents in the electrolyte on the impedance, cycle capacity retention rate, high-temperature storage swelling rate, and overcharge performance of the lithium-ion battery. The positive electrode active materials used in examples and comparative examples in Table 3 were lithium nickel manganese cobalt ternary materials represented by the general formula $LiNi_xCo_yMn_zO_2$, and the chemical formulas are $LiNi_{0.33}Co_{0.3}3Mn_{0.33}O_2$, $LiNi_{0.5}Co_{0.2}Mn_{0.3}O_2$, $LiNi_{0.6}Co_{0.1}Mn_{0.3}O_2$, $LiNi_{0.8}Co_{0.1}Mn_{0.1}O_2$, and $LiNi_{0.9}Co_{0.05}Mn_{0.05}O_2$, respectively. The types and mass percentages of organic solvents in the electrolyte used in examples and comparative examples in Table 3 are detailed in Table 3, and the electrolyte contains the additive: fluoroethylene carbonate.

**Table 3**

| | Active material | Ni Amount x in Active Material | Charge Cut-off Voltage U (V) | a(max) | FEC Percentage a(%) | c/a | EC | PC | Dimethyl carbonate DMC | EMC | DEC | Cycles at 45°C | Cycling Thickness Swelling Rate at 45°C (%) | Cycles for ITC at 45°C | Thickness Swelling Rate after 90 Days Storage at 60°C (%) | Thickness Swelling Rate after 60 Days CV at 45°C (%) | 70% SOC DCR at 0°C (mΩ) | Number of Passes in 3C 5.7 V Overcharge Test |
|---|---|---|---|---|---|---|---|---|---|---|---|---|---|---|---|---|---|---|
| Comparative example 2-2 | $LiNi_{0.6}Co_{0.1}Mn_{0.3}O_2$ | 0.6 | 4.4 | 2.15 | 2 | 30 | 20 | 20 | | 20 | 40 | 269 | 49 | 20 | 17 | 19 | 111 | 1 |
| Comparative example 3-1 | $LiNi_{0.6}Co_{0.1}Mn_{0.3}O_2$ | 0.6 | 4.4 | 2.15 | 2 | 0 | 10 | 30 | 60 | | | 85 | 87 | 8 | 138 | 186 | 90 | 0 |
| Comparative example 3-2 | $LiNi_{0.6}Co_{0.1}Mn_{0.3}O_2$ | 0.6 | 4.4 | 2.15 | 2 | 5 | 10 | 30 | 50 | | 10 | 112 | 70 | 11 | 101 | 124 | 95 | 0 |
| Comparative example 3-3 | $LiNi_{0.6}Co_{0.1}Mn_{0.3}O_2$ | 0.6 | 4.4 | 2.15 | 0.05 | 1200 | 10 | 30 | | | 60 | 231 | 62 | 18 | 19 | 24 | 113 | 2 |
| Example 3-1 | $LiNi_{0.6}Co_{0.1}Mn_{0.3}O_2$ | 0.6 | 4.4 | 2.15 | 2 | 30 | 10 | 30 | | | 60 | 452 | 16 | 42 | 10 | 13 | 110 | 3 |
| Example 3-2 | $LiNi_{0.6}Co_{0.1}Mn_{0.3}O_2$ | 0.6 | 4.4 | 2.15 | 2 | 30 | 10 | 30 | | 60 | | 371 | 21 | 33 | 13 | 17 | 102 | 2 |
| Example 3-3 | $LiNi_{0.6}Co_{0.1}Mn_{0.3}O_2$ | 0.6 | 4.4 | 2.15 | 2 | 10 | 10 | 30 | 40 | 20 | | 285 | 28 | 22 | 15 | 17 | 95 | 2 |
| Example 3-4 | $LiNi_{0.6}Co_{0.1}Mn_{0.3}O_2$ | 0.6 | 4.4 | 2.15 | 2 | 10 | 10 | 30 | 40 | | 20 | 318 | 22 | 28 | 13 | 15 | 98 | 2 |
| Example 3-5 | $LiNi_{0.6}Co_{0.1}Mn_{0.3}O_2$ | 0.6 | 4.4 | 2.15 | 2 | 30 | 30 | 10 | | | 60 | 410 | 19 | 35 | 16 | 19 | 118 | 3 |

| | Active material | Ni Amount x in Active Material | Charge Cut-off Voltage U (V) | a(max) | FEC Percentage a(%) | c/a | EC | PC | Dimethyl carbonate DMC | EMC | DEC | Cycles at 45°C | Cycling Thickness Swelling Rate at 45°C (%) | Cycles for ITC at 45°C | Thickness Swelling Rate after 90 Days Storage at 60°C (%) | Thickness Swelling Rate after 60 Days CV at 45°C (%) | 70% SOC DCR at 0°C (mΩ) | Number of Passes in 3C 5.7 V Overcharge Test |
|---|---|---|---|---|---|---|---|---|---|---|---|---|---|---|---|---|---|---|
| Example 3-6 | $LiNi_{0.6}Co_{0.1}Mn_{0.3}O_2$ | 0.6 | 4.4 | 2.15 | 1 | 60 | 40 | 0 | | | 60 | 343 | 24 | 29 | 17 | 19 | 119 | 4 |
| Example 3-7 | $LiNi_{0.6}Co_{0.1}Mn_{0.3}O_2$ | 0.6 | 4.4 | 2.15 | 0.1 | 600 | 10 | 30 | | | 60 | 297 | 30 | 31 | 15 | 17 | 112 | 1 |
| Example 3-8 | $LiNi_{0.33}Co_{0.33}Mn_{0.33}O$ | 0.33 | 4.4 | 3.92 | 2 | 30 | 10 | 30 | | | 60 | 512 | 10 | 49 | 9 | 10 | 106 | 2 |
| Example 3-9 | $LiNi_{0.5}Co_{0.2}Mn_{0.3}O_2$ | 0.5 | 4.4 | 2.62 | 2 | 30 | 10 | 30 | | | 60 | 501 | 12 | 45 | 10 | 11 | 109 | 2 |
| Example 3-10 | $LiNi_{0.8}Co_{0.1}Mn_{0.1}O_2$ | 0.8 | 4.4 | 1.52 | 1 | 60 | 10 | 30 | | | 60 | 367 | 18 | 38 | 11 | 14 | 116 | 1 |
| Example 3-11 | $LiNi_{0.9}Co_{0.05}Mn_{0.05}O_2$ | 0.9 | 4.4 | 1.29 | 1 | 60 | 10 | 30 | | | 60 | 301 | 20 | 30 | 13 | 18 | 119 | 1 |

Results in Table 3 show that the organic solvents in the electrolyte can further adjust the types of linear carbonates to improve the structural stability of the positive electrode active material. The linear carbonate being selected from at least one of diethyl carbonate or ethyl methyl carbonate can reduce the side reactions and surface impedance at the interface between the positive electrode active material and the electrolyte. On the basis that the charge cut-off voltage U V, the molar ratio x of nickel in the positive electrode active material, and the mass percentage a% of fluoroethylene carbonate in the electrolyte satisfy the relationship $a \leq \dfrac{2.3}{x^{0.7}} - 6x^{0.1}(U - 4.2)$, the mass percentage c% of linear carbonates with molecular molar mass greater than 100 (for example, diethyl carbonate or ethyl methyl carbonate) and the mass percentage a% of fluoroethylene carbonate satisfying the relationship $4 \leq \dfrac{c}{a} \leq 600$ is conducive to further reducing the impedance and high-temperature storage swelling rate of the lithium-ion battery under high voltage working conditions, further improving the cycle capacity retention rate and overcharge pass rate of the lithium-ion battery.

Table 4 shows the effects of the amount of nickel in the positive electrode active material, the charge cut-off voltage, the amount of fluoroethylene carbonate (FEC) in the electrolyte, and the addition of lithium difluorophosphate in the electrolyte on the impedance, cycle capacity retention rate, high-temperature storage swelling rate, and overcharge performance of the lithium-ion battery. The positive electrode active materials used in examples and comparative examples in Table 4 were lithium nickel manganese cobalt ternary materials represented by the general formula $LiNi_xCo_yMn_zO_2$, and the chemical formulas are $LiNi_{0.33}Co_{0.33}Mn_{0.33}O_2$, $LiNi_{0.5}Co_{0.2}Mn_{0.3}O_2$, $LiNi_{0.6}Co_{0.1}Mn_{0.3}O_2$, $LiNi_{0.8}Co_{0.1}Mn_{0.1}O_2$, and $LiNi_{0.9}Co_{0.05}Mn_{0.05}O_2$, respectively. The components of the organic solvents in the electrolytes used in examples and comparative examples in Table 4 were ethylene carbonate (EC), propylene carbonate (PC), ethyl methyl carbonate (EMC), and diethyl carbonate (DEC) mixed at a mass ratio of EC:EMC:DEC=20:20:20:40, and the electrolyte contains the additives: fluoroethylene carbonate and lithium difluorophosphate.

**Table 4**

| | Active material | Ni Amount x in Active Material | Charge Cut-off Voltage U (V) | a(max) | FEC Percentage a(%) | Lithium difluorophosphate d% | x/d | Cycles at 45°C | Cycling Thickness Swelling Rate at 45°C (%) | Cycles for ITC at 45°C | Thickness Swelling Rate after 90 Days Storage at 60°C (%) | Thickness Swelling Rate after 60 Days CV at 45°C (%) | 70% SOC DCR at 0°C (mΩ) | Number of Passes of 10ea Battery Cells in 3C 5.7 V Overcharge Test |
|---|---|---|---|---|---|---|---|---|---|---|---|---|---|---|
| Comparative example 2-2 | $LiNi_{0.6}Co_{0.1}Mn_{0.3}O_2$ | 0.6 | 4.4 | 2.1 | 2 | | / | 269 | 49 | 20 | 17 | 19 | 111 | 1 |
| Example 4-1 | $LiNi_{0.6}Co_{0.1}Mn_{0.3}O_2$ | 0.6 | 4.4 | 2.1 | 2 | 0.01 | 60 | 287 | 52 | 18 | 15 | 16 | 110 | 1 |
| Example 4-2 | $LiNi_{0.6}Co_{0.1}Mn_{0.3}O_2$ | 0.6 | 4.4 | 2.1 | 2 | 0.1 | 6 | 324 | 58 | 15 | 13 | 13 | 109 | 2 |
| Example 4-3 | $LiNi_{0.6}Co_{0.1}Mn_{0.3}O_2$ | 0.6 | 4.4 | 2.1 | 2 | 0.3 | 2 | 416 | 77 | 12 | 10 | 10 | 106 | 3 |
| Example 4-4 | $LiNi_{0.6}Co_{0.1}Mn_{0.3}O_2$ | 0.6 | 4.4 | 2.1 | 2 | 0.5 | 1.2 | 472 | 80 | 10 | 7 | 9 | 102 | 4 |
| Example 4-5 | $LiNi_{0.6}Co_{0.1}Mn_{0.3}O_2$ | 0.6 | 4.4 | 2.1 | 2 | 1 | 0.6 | 486 | 83 | 9 | 6 | 9 | 102 | 4 |
| Example 4-6 | $LiNi_{0.33}Co_{0.33}Mn_{0.33}O$ | 0.3 | 4.4 | 3.9 | 2 | 0.5 | 0.6 | 870 | 88 | 8 | 9 | 10 | 106 | 2 |
| Example 4-7 | $LiNi_{0.5}Co_{0.2}Mn_{0.3}O_2$ | 0.5 | 4.4 | 2.6 | 2 | 0.5 | 1 | 852 | 81 | 9 | 10 | 11 | 109 | 2 |
| Example 4-8 | $LiNi_{0.8}Co_{0.1}Mn_{0.1}O_2$ | 0.8 | 4.4 | 1.5 | 1 | 0.5 | 1.6 | 624 | 68 | 15 | 13 | 16 | 109 | 1 |
| Example 4-9 | $LiNi_{0.9}Co_{0.05}Mn_{0.05}O_2$ | 0.9 | 4.4 | 1.3 | 1 | 0.5 | 1.8 | 512 | 54 | 18 | 17 | 19 | 111 | 1 |

The results in Table 4 show that the addition of lithium difluorophosphate in the electrolyte can further form a thin and uniform low-impedance protective layer at the interfaces of the positive electrode active material layer and the negative electrode active material layer, and its wide electrochemical window can effectively inhibit side reactions between the electrolyte and the electrode interfaces. On the basis that the charge cut-off voltage U V, the molar ratio x of nickel in the positive electrode active material, and the mass percentage a% of fluoroethylene carbonate in the electrolyte satisfy the relationship $a \leq \frac{2.3}{x^{0.7}} - 6x^{0.1}(U - 4.2)$, the mass percentage d% of lithium difluorophosphate and the molar ratio x of nickel in the lithium nickel oxide satisfying the relationship $0.3 \leq \frac{x}{d} \leq 100$ is conducive to further reducing the impedance and high-temperature storage swelling rate of the lithium-ion battery under high voltage working conditions, further improving the cycle capacity retention rate and overcharge pass rate of the lithium-ion battery.

Table 5 shows the effects of the amount of nickel in the positive electrode active material, the charge cut-off voltage, the amount of fluoroethylene carbonate (FEC) in the electrolyte, and the addition of polycyan compounds in the electrolyte on the impedance, cycle capacity retention rate, high-temperature storage swelling rate, and overcharge performance of the lithium-ion battery. The positive electrode active materials used in examples and comparative examples in Table 5 were lithium nickel manganese cobalt ternary materials represented by the general formula $LiNi_xCo_yMn_zO_2$, and the chemical formulas are $LiNi_{0.33}Co_{0.33}Mn_{0.33}O_2$, $LiNi_{0.5}Co_{0.2}Mn_{0.3}O_2$, $LiNi_{0.6}Co_{0.1}Mn_{0.3}O_2$, $LiNi_{0.8}Co_{0.1}Mn_{0.1}O_2$, and $LiNi_{0.9}Co_{0.05}Mn_{0.05}O_2$, respectively. The components of the organic solvents in the electrolytes used in examples and comparative examples in Table 5 were ethylene carbonate (EC), propylene carbonate (PC), ethyl methyl carbonate (EMC), and diethyl carbonate (DEC) mixed at a mass ratio of EC:EMC:DEC=20:20:20:40, and the electrolyte contains the additives: fluoroethylene carbonate and a polycyan compound. The type and mass percentage of the polycyan compound are detailed in Table 5.

The results in Table 5 show that the addition of the polycyan compound in the electrolyte can further enhance the protection for the interfaces of the positive electrode active material layer and the negative electrode active material layer in the nickel-containing positive electrode active material system. On the basis that the charge cut-off voltage U V, the molar ratio x of nickel in the positive electrode active material, and the mass percentage a% of fluoroethylene carbonate in the electrolyte satisfy the relationship $a \leq \frac{2.3}{x^{0.7}} - 6x^{0.1}(U - 4.2)$, when the mass percentage of the polycyan compound is in a range of 0.1% to 5%, the combination of polycyan compounds and fluoroethylene carbonate is conducive to further reducing the impedance and high-temperature storage swelling rate of the lithium-ion battery under high voltage working conditions, further improving the cycle capacity retention rate and overcharge pass rate of the lithium-ion battery.

Table 5

| | Ni Amount x in Active Material | Charge Cut-off Voltage U (V) | a(max) | FEC Percentage a(%) | Lithium difluorophosphate d% | 1,3-Propane Sultone (PS) | Diethyl Sulfate (DTD) | 1,2-Bis(cyanoethoxy)ethane (DENE) | 1,3,6-Hexanetrinitrile (HTCN) | 1,1,2,2-Ethanetetracarbonitrile | Cycles at 25°C | Cycling THK Swelling at 25°C (%) | Cycles at 45°C | Cycling THK Swelling at 45°C (%) | Cycles for ITC at 45°C | Thickness Swelling Rate after 90 Days Storage at 60°C (%) | THK Swelling Rate after 60 Days CV at 45°C (%) | 70% SOC DCR at 0°C (mΩ) | Number of Passes in 3C 5.7 V Overcharge Test |
|---|---|---|---|---|---|---|---|---|---|---|---|---|---|---|---|---|---|---|---|
| Comparative example 2-2 | 0.6 | 4.4 | 2.1 | 2 | | | | | | | 448 | 12 | 269 | 49 | 20 | 17 | 19 | 111 | 1 |
| Example 5-1 | 0.6 | 4.4 | 2.1 | 2 | 0.5 | 3 | | | | | 1028 | 10 | 617 | 12 | 105 | 6 | 8 | 101 | 8 |
| Example 5-2 | 0.6 | 4.4 | 2.1 | 2 | 0.5 | 3 | 0.5 | | | | 1225 | 9 | 735 | 10 | 116 | 6 | 8 | 99 | 9 |
| Example 5-3 | 0.6 | 4.4 | 2.1 | 2 | 0.5 | 3 | 0.5 | 1.5 | | | 1247 | 9 | 748 | 10 | 136 | 5 | 7 | 100 | 10 |
| Example 5-4 | 0.6 | 4.4 | 2.1 | 2 | 0.5 | 3 | 0.5 | | 1.5 | | 1482 | 9 | 889 | 10 | 148 | 5 | 6 | 100 | 10 |
| Example 5-5 | 0.6 | 4.4 | 2.1 | 2 | 0.5 | 3 | 0.5 | | | 1.5 | 1495 | 9 | 897 | 10 | 152 | 5 | 6 | 101 | 10 |
| Example 5-6 | 0.6 | 4.4 | 2.1 | 2 | 0.5 | 3 | 0.5 | 1.5 | 1.5 | | 1510 | 8 | 906 | 9 | 161 | 5 | 6 | 101 | 10 |
| Example 5-7 | 0.33 | 4.4 | 3.9 | 2 | 0.5 | 3 | 0.5 | 1.5 | 1.5 | | 2108 | 8 | 1265 | 9 | 183 | 5 | 9 | 93 | 10 |
| Example 5-8 | 0.5 | 4.4 | 2.6 | 2 | 0.5 | 3 | 0.5 | 1.5 | 1.5 | | 1790 | 8 | 1074 | 9 | 175 | 5 | 10 | 98 | 10 |
| Example 5-9 | 0.8 | 4.4 | 1.5 | 1 | 0.5 | 3 | 0.5 | 1.5 | 1.5 | | 1260 | 10 | 756 | 11 | 115 | 8 | 10 | 103 | 10 |
| Example 5-10 | 0.9 | 4.4 | 1.3 | 1 | 0.5 | 3 | 0.5 | 1.5 | 1.5 | | 1003 | 10 | 602 | 14 | 89 | 10 | 12 | 107 | 10 |

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

## Claims

1. An electrochemical apparatus, comprising:

   a positive electrode, wherein the positive electrode comprises a positive electrode active material layer, and the positive electrode active material layer comprises a positive electrode active material, wherein the positive electrode active material comprises lithium nickel oxide; and
   an electrolyte, wherein the electrolyte comprises fluoroethylene carbonate, wherein based on a total mass of the electrolyte, a mass percentage of the fluoroethylene carbonate is a%, wherein
   a charge cut-off voltage U V of the electrochemical apparatus, a molar ratio x of nickel in the lithium nickel oxide, and the mass percentage a% of the fluoroethylene carbonate in the electrolyte satisfy the following relationship:

$$a \leq \frac{2.3}{x^{0.7}} - 6x^{0.1}(U - 4.2).$$

2. The electrochemical apparatus according to claim 1, wherein x satisfies 0.3<x≤1.

3. The electrochemical apparatus according to claim 1, wherein the lithium nickel oxide comprises a compound represented by a general formula $LiNi_xMl_yM2_zO_2$ or $n[Li_2MnO_3]\cdot(1-n)[LiNi_xMl_yM2_zO_2]$, wherein M1 and M2 comprise one or more selected from a group consisting of Co, Mn, Al, Mg, Ti, or Zr, 0.3≤x≤1, 0≤y≤0.7, 0≤z≤0.7, and 0≤n<1.

4. The electrochemical apparatus according to claim 1, wherein the charge cut-off voltage U of the electrochemical apparatus is in a range of 4.2 V to 5.5 V

5. The electrochemical apparatus according to claim 1, wherein the mass percentage a% of the fluoroethylene carbonate in the electrolyte is 0.05% to 5.3%.

6. The electrochemical apparatus according to claim 1, wherein the electrolyte further comprises a sulfur-oxygen double-bond compound.

7. The electrochemical apparatus according to claim 6, wherein the sulfur-oxygen double-bond compound comprises one or more selected from a group consisting of 1,3-propane sultone (PS), 2,4-butane sultone, 1,4-butane sultone, diethyl sulfate (DTD), propylene-1,3-sultone (PES), methylene disulfonate (MMDS), vinyl sulfone (DVS), 1,2,6-oxadithiane, 2,2,6,6-tetraoxide (CAS: 4720-58-5), 4-methylethylene sulfate (PCS), 3-cyclobutene sulfone, dihydro-1,3,2-dioxathiacyclo[1,3,2]dioxathiacyclo-2,2,5,5-tetraoxide (CAS: 496-45-7), and pentaerythritol bicyclic sulfate compounds.

8. The electrochemical apparatus according to claim 6, wherein based on the total mass of the electrolyte, a mass percentage of the sulfur-oxygen double-bond compound is b%, wherein the mass percentage b% of the sulfur-oxygen double-bond compound and the mass percentage a% of the fluoroethylene carbonate satisfy the following relationship: $0.02 \leq \frac{b}{a} \leq 5$.

9. The electrochemical apparatus according to claim 6, wherein based on the total mass of the electrolyte, a mass percentage b% of the sulfur-oxygen double-bond compound is in a range of 0.1% to 5%.

10. The electrochemical apparatus according to claim 1, wherein the electrolyte further comprises an organic solvent and a lithium salt, wherein the organic solvent comprises a linear carbonate, and the linear carbonate is selected from at least one of dimethyl carbonate, diethyl carbonate, or ethyl methyl carbonate.

11. The electrochemical apparatus according to claim 10, wherein based on a total mass of the organic solvent, a percentage of the linear carbonate is less than or equal to 70%; and/or based on the total mass of the electrolyte, a percentage of the linear carbonate is less than or equal to 60%.

12. The electrochemical apparatus according to claim 10, wherein based on the total mass of the electrolyte, a mass percentage c% of the linear carbonate has a molecular molar mass greater than 100, wherein the mass percentage c% of the linear carbonate with the molecular molar mass greater than 100 and the mass percentage a% of the fluoroethylene carbonate satisfy the following relationship: $4 \leq \frac{c}{a} \leq 600$.

13. The electrochemical apparatus according to claim 10, wherein based on the total mass of the electrolyte, a mass percentage c% of the linear carbonate is 20% to 60%.

14. The electrochemical apparatus according to claim 1, wherein the electrolyte further comprises an additive lithium difluorophosphate.

15. The electrochemical apparatus according to claim 14, wherein based on the total mass of the electrolyte, a mass percentage of the additive lithium difluorophosphate is d%, wherein the mass percentage d% of the additive lithium difluorophosphate and the molar ratio x of nickel in the lithium nickel oxide satisfy the following relationship:

$$0.3 \leq \frac{x}{d} \leq 100$$.

16. The electrochemical apparatus according to claim 14, wherein based on the total mass of the electrolyte, a mass percentage d% of the additive lithium difluorophosphate is in a range of 0.01% to 1%.

17. The electrochemical apparatus according to claim 1, wherein the electrolyte further comprises a polycyan compound, and the polycyan compound comprises one or more selected from a group consisting of a dinitrile compound, a trinitrile compound, and a tetranitrile compound.

18. The electrochemical apparatus according to claim 17, wherein the dinitrile compound comprises one or more selected from a group consisting of succinonitrile, adiponitrile, 1,2-bis(cyanoethoxy)ethane, and 1,4-dicyano-2-butene; the trinitrile comprises one or more selected from a group consisting of 1,3,6-hexanetrinitrile and 1,2,3-tris(2-cyano) propane; and the tetranitrile comprises one or more selected from a group consisting of 1,1,3,3-propanetetracarbonitrile, 1,1,2,2-ethanetetracarbonitrile, 4-(2-cyanoethyl)-4-cyanopimelanitrile, and pentane-1,3,3,5-tetracarbonitrile.

19. The electrochemical apparatus according to claim 17, wherein based on the total mass of the electrolyte, a mass percentage of the polycyan compound is in a range of 0.1% to 5%.

20. An electronic apparatus, comprising the electrochemical apparatus according to any one of claims 1 to 19.

| INTERNATIONAL SEARCH REPORT | International application No. |
|---|---|
| | **PCT/CN2022/084597** |

**A.    CLASSIFICATION OF SUBJECT MATTER**

H01M 10/0567(2010.01)i;  H01M 10/0525(2010.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 宁德, 时代新能源, 氟代碳酸乙烯酯, 锂镍, 充电, 截止电压, 终止电压, FEC, Ni, charge, voltage

**C.    DOCUMENTS CONSIDERED TO BE RELEVANT**

| Category* | Citation of document, with indication, where appropriate, of the relevant passages | Relevant to claim No. |
|---|---|---|
| X | CN 111640984 A (ZHUHAI COSMX BATTERY CO., LTD.) 08 September 2020 (2020-09-08) description, paragraphs [0039]-[0136] | 1-20 |
| X | CN 103730688 A (NINGDE AMPEREX TECHNOLOGY LTD.) 16 April 2014 (2014-04-16) description, paragraphs [0011]-[0080] | 1-20 |
| X | CN 101107745 A (UBE INDUSTRIES LTD.) 16 January 2008 (2008-01-16) description, page 25 line 13 to page 27 line 15 | 1-20 |
| A | US 2022037698 A1 (UT-Battelle LLC et al.) 03 February 2022 (2022-02-03) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 May 2022** | **29 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/084597**

| Patent document cited in search report | | | Publication date (day/month/year) | Patent family member(s) | | | Publication date (day/month/year) |
|---|---|---|---|---|---|---|---|
| CN | 111640984 | A | 08 September 2020 | None | | | |
| CN | 103730688 | A | 16 April 2014 | CN | 103730688 | B | 08 June 2016 |
| CN | 101107745 | A | 16 January 2008 | WO | 2006077763 | A1 | 27 July 2006 |
| | | | | KR | 20070097072 | A | 02 October 2007 |
| | | | | US | 2009053598 | A1 | 26 February 2009 |
| | | | | CN | 100559648 | C | 11 November 2009 |
| | | | | JP | 2010118356 | A | 27 May 2010 |
| | | | | JP | 4479728 | B2 | 09 June 2010 |
| | | | | US | 7754380 | B2 | 13 July 2010 |
| | | | | US | 2010239919 | A1 | 23 September 2010 |
| | | | | JP | 4985794 | B2 | 25 July 2012 |
| | | | | JP | 2012079711 | A | 19 April 2012 |
| | | | | KR | 20120109607 | A | 08 October 2012 |
| | | | | KR | 101229133 | B1 | 01 February 2013 |
| | | | | KR | 101229193 | B1 | 01 February 2013 |
| | | | | US | 2013052541 | A1 | 28 February 2013 |
| | | | | US | 8440349 | B2 | 14 May 2013 |
| | | | | US | 8530080 | B2 | 10 September 2013 |
| | | | | JP | 2013239468 | A | 28 November 2013 |
| | | | | JP | 5754484 | B2 | 29 July 2015 |
| | | | | IN | 200703175 | P4 | 07 September 2007 |
| | | | | IN | 261354 | B | 27 June 2014 |
| US | 2022037698 | A1 | 03 February 2022 | WO | 2020131648 | A1 | 25 June 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS*, 4720-58-5
- *CHEMICAL ABSTRACTS*, 496-45-7